# EUROPÄISCHE PATENTANMELDUNG

(11) **EP 3 023 202 A1**
(43) Veröffentlichungstag der Anmeldung: **25.05.2016**
(21) Anmeldenummer: 14194078.3
(22) Anmeldetag: 20.11.2014
(51) Int. Cl.: B25F 5/00, B25F 5/02

(54) **Sicherheitsverfahren und Handwerkzeugmaschine**

(71) Anmelder: HILTI Aktiengesellschaft, 9494 Schaan (LI)
(72) Erfinder: Mößnang, Franz, 86391 Stadtbergen (DE); Draganis, Antonios, 75365 Calw (DE); Schaer, Roland, 9472 Grabs (CH); Hricko, Peter, 9470 Buchs (CH); Manschitz, Erwin, 82110 Germering (DE); Gillmeier, Bernd, 86899 Landsberg (DE)
(74) Vertreter: Hilti Aktiengesellschaft Corporate Intellectual Property

(57) **Zusammenfassung**

Eine Handwerkzeugmaschine 1 hat eine Werkzeugaufnahme 2 zum Aufnehmen eines Werkzeuges auf einer Arbeitsachse 11, einen Motor 5 zum drehenden Antreiben der Werkzeugaufnahme 2 um die Arbeitsachse 11. Der Motor 5 ist in einem Maschinengehäuse 16 angeordnet und ein Handgriff 9 ist zum Führen der Handwerkzeugmaschine 1 während eines Betriebs an dem Maschinengehäuse 16 befestigt. Ein Drehbewegungssensor 15 erfasst eine Drehbewegung des Maschinengehäuses 16 um die Arbeitsachse 11. Ein ermittelt Monitor 19 eine Haltekraft basierend auf einer Amplitude der Drehbewegung in einem Frequenzbereich zwischen 0,4 Hz und 4 Hz. Eine Sicherheitseinrichtung 13 reduziert eine Drehmomentabgabe an die Werkzeugaufnahme 2, wenn die erfasste Drehbewegung einen Grenzwert überschreitet, wobei der Grenzwert in Abhängigkeit der Haltekraft eingestellt ist.

## Beschreibung

### GEBIET DER ERFINDUNG

Die vorliegende Erfindung betrifft ein Steuerungsverfahren für eine Handwerkzeugmaschine mit rotierendem Werkzeug, insbesondere einen Bohrhammer oder einen Elektroschrauber.

US 7,552,781 offenbart einen Bohrhammer mit einem Anti-Kickback System. Ein Drehratensensor bestimmt basierend auf einer Auslenkung einer Schwingungsmasse eine Drehgeschwindigkeit des Elektroschraubers um eine Arbeitsachse. Eine Schutzfunktion wird basierend auf der erfassten Drehgeschwindigkeit aktiviert. Die Schutzfunktion reduziert das Drehmoment an dem Werkzeug.

Das Auslösen der Schutzfunktion soll zuverlässig erfolgen. Hierbei sind sowohl ein Auslösen ohne Gefährdungspotential für den Anwender als auch ein Nicht-Auslösen bei Gefährdungspotential zu vermeiden.

### OFFENBARUNG DER ERFINDUNG

Die erfindungsgemäße Handwerkzeugmaschine hat eine Werkzeugaufnahme zum Aufnehmen eines Werkzeuges auf einer Arbeitsachse, einen Motor zum drehenden Antreiben der Werkzeugaufnahme um die Arbeitsachse. Der Motor ist in einem Maschinengehäuse angeordnet und ein Handgriff ist zum Führen der Handwerkzeugmaschine während eines Betriebs an dem Maschinengehäuse befestigt. Ein Drehbewegungssensor erfasst eine Drehbewegung des Maschinengehäuses um die Arbeitsachse. Ein Monitor ermittelt eine Haltekraft basierend auf einer Amplitude der Drehbewegung in einem Frequenzbereich zwischen 0,4 Hz und 4 Hz. Eine Sicherheitseinrichtung reduziert eine Drehmomentabgabe an die Werkzeugaufnahme, wenn die Drehbewegung einen Grenzwert überschreitet. Der Grenzwert wird in Abhängigkeit der Haltekraft festgelegt.

Die Sicherheitseinrichtung passt ihr Auslöseverhalten an eine ermittelte Haltekraft des Anwenders an. Der Einfluss der Haltekraft auf die mittlere Bewegung der Handwerkzeugmaschine ist nicht signifikant von anderen Einflüssen auf die mittlere Bewegung zu unterscheiden. Insbesondere die vielfältigen Anwendungen und einhergehend unterschiedlichen typischen Bewegungen ein und der selben Handwerkzeugmaschine erschweren eine Identifikation der Haltekraft. Erfindungsgemäß wurde erkannt, dass in einem schmalen Frequenzbereich die Drehbewegung um die Arbeitsachse aussagekräftig für die Haltekraft ist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrhammer
- Fig. 2: ein Blockdiagramm einer Steuerung des Bohrhammers

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

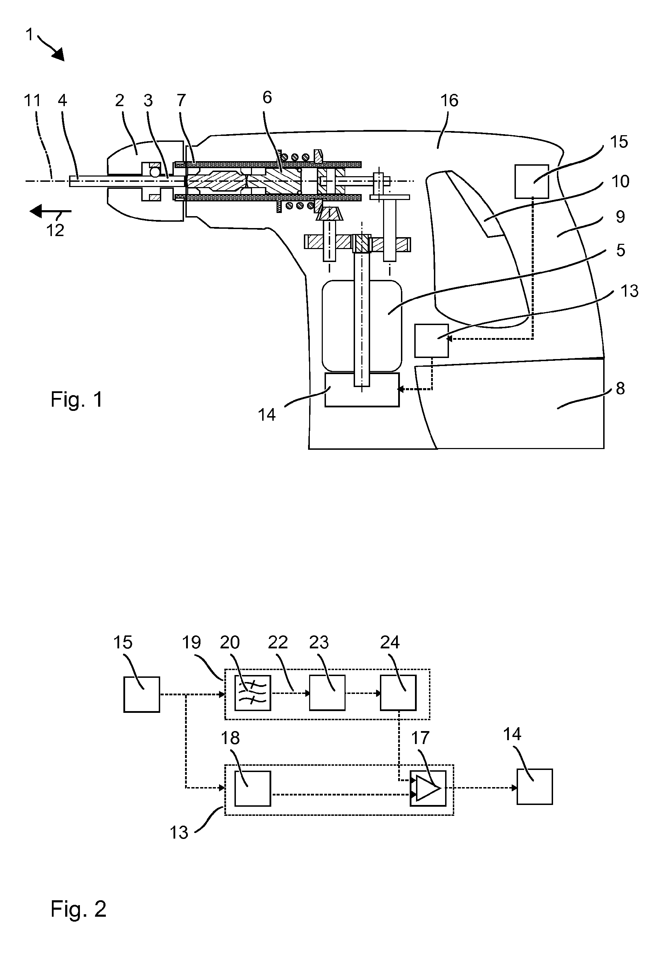

Fig. 1 zeigt als Ausführungsbeispiel einer Handwerkzeugmaschine einen Bohrhammer **1.** Der Bohrhammer **1** hat eine Werkzeugaufnahme **2,** in welche ein Schaftende **3** eines Werkzeug, z.B. eines des Bohrers **4,** eingesetzt werden kann. Einen primären Antrieb des Bohrhammers **1** bildet ein Motor **5,** welcher ein Schlagwerk **6** und eine Abtriebswelle **7** antreibt. Ein Batteriepaket **8** oder eine Netzleitung versorgt den Motor **5** mit Strom. Ein Anwender kann den Bohrhammer **1** mittels eines Handgriffs **9** führen und mittels eines Haupttasters **10** den Bohrhammer **1** in Betrieb nehmen. Im Betrieb dreht der Bohrhammer **1** den Bohrer **4** kontinuierlich um eine Arbeitsachse **11** und kann dabei den Bohrer **4** in Schlagrichtung **12** längs der Arbeitsachse **11** in einen Untergrund schlagen.

Der Bohrhammer **1** hat eine Sicherheitseinrichtung **13,** die den Anwender vor einem übermäßigen rückwirkenden Drehmoment des Bohrers **4** schützt. Die Bohrmaschine **10** übt auf den Anwender ein rückwirkendes Drehmoment aus, welches sich als Reaktion auf das von dem Bohrer **4** auf das Werkstück übertragene Drehmoment ergibt. Solange der Untergrund beim Bohren nachgibt, ist das rückwirkende Drehmoment gleichmäßig und gering. Bei einem Blockieren eines Bohrers in dem Werkstück ergibt sich aufgrund der schlagartig abgebremsten rotierenden Baugruppen ein hohes rückwirkendes Drehmoment. Der Anwender kann diesem rückwirkenden Drehmoment nicht mehr ausreichend entgegenwirken, weshalb sich der gesamte Bohrhammer **1** einschließlich der Handgriffe **12** um die Drehachse des Bohrers **4** zu drehen beginnt. Die Sicherheitseinrichtung **13** überwacht eine Drehbewegung des Handgriffs **9** bezogen auf die Arbeitsachse **11** und reduziert die Drehmomentabgabe an die Werkzeugaufnahme **2,** wenn die momentane Drehbewegung ein Verdrehen des gesamten Bohrhammers **1** um einen kritischen Winkel erwarten lässt. Der kritische Winkel liegt beispielsweise bei 60 Grad. Die Reduktion des Drehmoments erfolgt beispielsweise durch Stoppen des Motor **5** mit einer Bremse **14.**

Die Sicherheitseinrichtung **13** erfasst die Drehbewegung des Handgriffs **9** mit einem Drehbewegungssensor **15.** Der Drehbewegungssensor **15** ist beispielsweise ein Gyrosensor, welcher unmittelbar die Winkelgeschwindigkeit um die Arbeitsachse **11** bestimmt. Der Gyrosensor hat z.B. ein schwingend aufgehängtes Plättchen. Die Corioliskraft bei der Drehbewegung nimmt Einfluss auf die Schwingungsfrequenz des Plättchens. Der Drehbewegungssensor **15** ermittelt aus der Schwingungsfrequenz die die Corioliskraft auslösende Winkelgeschwindigkeit. Der Drehbewegungssensor **15** kann nahe der Arbeitsachse **11** oder versetzt zu der Arbeitsachse **11** in dem Maschinengehäuse **16** oder dem Handgriff **9** angeordnet sein.

Die Sicherheitseinrichtung **13** wertet die Winkelgeschwindigkeit aus und ermittelt, ob eine einen Anwender gefährdende Situation vorliegt. Eine beispielhafte einfache Auswertung der Sicherheitseinrichtung **13** basiert auf einem Komparator **17,** der vergleicht, ob die die Winkelgeschwindigkeit einen Grenzwert für die Winkelgeschwindigkeit überschreitet. In dem Fall löst die Sicherheitseinrichtung **13** eine geeignete Schutzmaßnahme aus. Beispielsweise aktiviert die Sicherheitseinrichtung **13** die Bremse **14** des Motors **5.** Der Motor **5** wird vorzugsweise bis zum Stillstand abgebremst.

Eine andere Auswertung ermittelt beispielsweise einen aktuellen Verdrehwinkel des Maschinengehäuses **16** gegenüber einen vorhergehenden Zeitpunkt. Eine Auswertungseinheit **18** integriert die Winkelgeschwindigkeit ab dem Zeitpunkt auf. Überschreitet der Verdrehwinkel einen Grenzwert für den Verdrehwinkel löst die Sicherheitseinrichtung **13** die geeignete Schutzmaßnahme aus.

Eine andere Auswertungseinheit **18** kombiniert die aktuelle Winkelgeschwindigkeit und den aktuellen Verdrehwinkel. Beispielsweise wird ein zukünftiger Verdrehwinkel geschätzt. Der zukünftige Verdrehwinkel ist die Summe des aktuellen Verdrehwinkels und dem Produkt der aktuellen Winkelgeschwindigkeit mit einer festen Zeitspanne von z.B. 10 ms. Der zukünftige Verdrehwinkel wird mit einem Grenzwert für den zukünftigen Verdrehwinkel verglichen und ggf. wird die Sicherheitseinrichtung **13** ausgelöst. Anstelle den zukünftigen Verdrehwinkel zu ermitteln, kann eine Tabelle mit Paaren von Grenzwerten für die Winkelgeschwindigkeit und den aktuellen Verdrehwinkel herangezogen werden. Die Sicherheitseinrichtung **13** wird ausgelöst, wenn beide Grenzwerte eines Paares überschritten sind.

Die Sicherheitseinrichtung **13** ermittelt das Benutzerverhalten im laufenden Betrieb, auch außerhalb einer möglicherweise kritischen Situation. Ein Monitor **19** ermittelt die mittlere Haltekraft, die der Anwender gegen ein Verdrehen des Bohrhammers **1** um die Arbeitsachse **11** aufbringt. Die Haltekraft des Anwenders ist vorwiegend von dessen physischer Kraft aber auch von dessen Aufmerksamkeit, Tätigkeit, Raumorientierung des Bohrhammers **1** etc. abhängig. Während des Bohrens erzeugt der sich mit einer weitgehend konstanten Drehzahl drehende und mit einer weitgehend konstanten Schlagzahl mit Schlägen beaufschlagte Bohrer **4** Erschütterungen in dem Bohrhammer **1.** Die Amplitude der Erschütterungen ist von dem Untergrund, dem Werkzeug, der Anpresskraft und der Haltekraft des Anwenders abhängig. Obwohl eine Vielzahl von unbekannten Größen die Amplitude der Erschütterungen beeinflussen, zeigt sich eine durch die Haltekraft dominierte Abhängigkeit der Amplitude in einem schmalen Frequenzbereich um die 2 Hz. Der Monitor **19** nutzt diese Abhängigkeit, um ein Maß für die Haltekraft zu ermitteln. Der Monitor **19** beinhaltet einen Bandpassfilter **20** mit einer Mittenfrequenz zwischen 0,4 Hz und 4 Hz, dem das Messsignal **21** des Drehbewegungssensors **15** zugeführt wird. Die Amplitude des Ausgangssignals **22** des Bandpassfilters **20** wird als Maß für die Haltekraft erfasst. Beispielsweise kann das Ausgangssignal **22** in einem Gleichrichter **23** gleichgerichtet werden. Das gleichgerichtete Signal kann einem Diskriminator **24** zugeführt werden und beispielsweise einer von drei Kategorien "schwache Haltekraft", "mittlere Haltekraft" und "starke Haltekraft" zugeordnet werden.

Die Sicherheitseinrichtung **13** löst die Bremse **14** in Abhängigkeit der Haltekraft aus. Ein kräftig zupackender Anwender kann voraussichtlich auch einen schneller drehenden Bohrhammer **1** abbremsen, bevor ein kritischer Winkel erreicht wird, verglichen zu einem schwächer zupackenden Anwender. Die Sicherheitseinrichtung **13** ändert den Grenzwert des Komparators **17** in Abhängigkeit der ermittelten Haltekraft. Beispielsweise ist der Grenzwert bei der "starken Haltekraft" größer eingestellt, als bei der "schwachen Haltekraft." Vorzugsweise nimmt der Grenzwert mit zunehmender Haltekraft stetig oder schrittweise zu.

Die Bremse **14** kann beispielsweise eine mechanisch wirkende Bremse sein, welche den Bohrer **4** klemmt. Vorzugsweise wird dabei der Antriebsstrang durch eine Rutschkupplung oder elektrisch aktivierte Kupplung von dem Motor **5** abgekoppelt. Eine bevorzugte Ausführung sieht vor, die Bremse **14** mit dem Motor **5** zu realisieren. Der Motor **5** wird in einen generatorischen Betrieb geschaltet und die generierte elektrische Leistung in einen ohmschen Widerstand eingeleitet. Alternativ kann ein Strom in den Motor **5,** insbesondere bei einem Reluktanzmotor, so phasengesteuert eingespeist werden, dass die elektromechanische Kraft der Drehbewegung des Motors **5** entgegenwirkt. Das Drehmoment kann auch durch eine elektrisch gesteuerte Kupplung reduziert werden.

## Patentansprüche

1. Handwerkzeugmaschine (1) mit
einer Werkzeugaufnahme (2) zum Aufnehmen eines Werkzeuges auf einer Arbeitsachse (11), einem Motor (5) zum drehenden Antreiben der Werkzeugaufnahme (2) um die Arbeitsachse (11), einem Maschinengehäuse (16), in welchem der Motor (5) angeordnet ist, einem an dem Maschinengehäuse (16) befestigten Handgriff (9) zum Führen der Handwerkzeugmaschine (1) während eines Betriebs,
einem Drehbewegungssensor (15), der eine Drehbewegung des Maschinengehäuses (16) um die Arbeitsachse (11) erfasst,
einem Monitor (19), der eine Haltekraft des Anwenders basierend auf einer Amplitude der Drehbewegung in einem Frequenzbereich zwischen 0,4 Hz und 4 Hz ermittelt und einer Sicherheitseinrichtung (13), die eine Drehmomentabgabe an die Werkzeugaufnahme (2) reduziert, wenn die erfasste Drehbewegung den Grenzwert überschreitet und wobei der Grenzwert in Abhängigkeit der Haltekraft eingestellt ist.

2. Handwerkzeugmaschine nach Anspruch 1, **dadurch gekennzeichnet, dass** der Drehbewegungssensor (15) die Winkelgeschwindigkeit des Maschinengehäuses (16) um die Arbeitsachse (11) erfasst.

3. Handwerkzeugmaschine (1) nach Anspruch 1 oder 2, **dadurch gekennzeichnet, dass** die Sicherheitseinrichtung (13) eine auf der Winkelgeschwindigkeit und/oder auf einem Verdrehwinkel des Maschinengehäuses (16) basierende Größe mit einem Grenzwert vergleicht und die Sicherheitseinrichtung (13) den Grenzwert mit zunehmender Haltekraft erhöht.

4. Handwerkzeugmaschine (1) nach Anspruch 2 oder 3, **dadurch gekennzeichnet, dass** der Monitor (19) einen Bandpassfilter (20) mit den Grenzfrequenzen 0,4 Hz und 4 Hz aufweist.

5. Steuerungsverfahren für eine Handwerkzeugmaschine (1), die eine um eine Arbeitsachse (11) drehend angetriebene Werkzeugaufnahme (2) und einen an einem Maschinengehäuse (16) befestigten Handgriff (9) zum Führen der Handwerkzeugmaschine (1) während des Betriebs aufweist mit den Schritten:
Erfassen einer Drehbewegung des Maschinengehäuses (16) um die Arbeitsachse (11) mit einem Drehbewegungssensor (15);
Ermitteln einer Haltekraft des Anwenders basierend auf einer Amplitude der Drehbewegung in einem Frequenzbereich zwischen 0,4 Hz und 4 Hz mit einem Monitor; und
Reduzieren einer Drehmomentabgabe der Werkzeugaufnahme (2), wenn die erfasste Drehbewegung einen Grenzwert überschreitet, wobei der Grenzwert in Abhängigkeit der Haltekraft eingestellt ist.
